# EUROPÄISCHE PATENTSCHRIFT

(11) **EP 4 118 860 B1**
(45) Veröffentlichungstag und Bekanntmachung des Hinweises auf die Patenterteilung: **10.06.2026**
(21) Anmeldenummer: 21706899.8
(22) Anmeldetag: 18.02.2021
(51) Int. Cl.: H04W 12/63, H04L 9/40, H04W 4/021, H04L 12/28

(54) **VORRICHTUNG UND VERFAHREN ZUR STEUERUNG DES ZUGRIFFS AUF EIN ELEKTROGERÄT**
DEVICE AND METHOD FOR CONTROLLING THE ACCESS TO AN ELECTRICAL DEVICE
DISPOSITIF ET PROCÉDÉ POUR LA COMMANDE DE L'ACCÈS À UN DISPOSITIF ÉLECTRIQUE

(30) Priorität: 10.03.2020 DE 102020203031
(43) Veröffentlichungstag der Anmeldung: 18.01.2023
(73) Patentinhaber: BSH Hausgeräte GmbH, 81739 München (DE)
(72) Erfinder: FUSS, Oliver, 81825 München (DE); SCHMIDL, Jörg, 81827 München (DE); SÖLLNER, Christoph, 81475 München (DE)
(86) Internationale Anmeldenummer: PCT/EP2021/053949
(87) Internationale Veröffentlichungsnummer: WO 2021/180439

(56) Entgegenhaltungen:
- EP-A1- 2 814 273
- EP-A1- 3 024 193
- WO-A1-2018/116123
- WO-A1-2020/011519

## Beschreibung

Das vorliegende Dokument beschreibt eine Vorrichtung und ein entsprechendes Verfahren, mit denen in effizienter und zuverlässiger Weise die Position und/oder die relative örtliche Nähe eines mobilen Anwendergeräts relativ zu einem Elektrogerät, z.B. zu einem Hausgerät, ermittelt werden kann, insbesondere um eine Interaktion des Anwendergeräts mit dem Elektrogerät zu ermöglichen oder zu unterbinden.

Ein Hausgerät, z.B. eine Waschmaschine, eine Spülmaschine oder ein Ofen, umfasst typischerweise eine Benutzerschnittstelle, die es einem Nutzer ermöglicht, mit dem Hausgerät zu interagieren, z.B. um ein Betriebsprogramm des Hausgeräts auszuwählen und/oder um den Betrieb des Hausgeräts zu starten. Die Benutzerschnittstelle kann unterschiedliche Interaktionskomponenten, wie z.B. einen Bildschirm und mehrere (mechanische) Bedienelemente, umfassen. Diese Komponenten sind mit Kosten, sowohl bei der Herstellung des Hausgeräts als auch bei der Wartung des Hausgeräts, verbunden. Eine Möglichkeit zur Reduzierung der Kosten eines Hausgeräts und/oder zur Erhöhung des Bedienkomforts eines Hausgeräts ist es, eine Benutzerschnittstelle des Hausgeräts über ein mobiles Anwendergeräts (z.B. über ein Smartphone) eines Nutzers des Hausgeräts zu ermöglichen. Es kann dann ggf. auf den Verbau einer Benutzerschnittstelle im Hausgerät verzichtet werden.

Das vorliegende Dokument befasst sich mit der technischen Aufgabe, eine sichere und zuverlässige Bedienung eines Elektrogeräts, insbesondere eines Hausgeräts, über ein (ggf. mobiles) Anwendergerät zu ermöglichen.

Die Aufgabe wird jeweils durch die Gegenstände des unabhängigen Patentanspruchs gelöst. Vorteilhafte Ausführungsformen sind insbesondere in den abhängigen Patentansprüchen definiert, in nachfolgender Beschreibung beschrieben oder in der beigefügten Zeichnung dargestellt.

Die Patentschriften EP 2 814 273 A1 und WO 2018/116123 A1 repräsentieren einschlägigen Stand der Technik.

Gemäß einem Aspekt der Erfindung wird eine Vorrichtung (z.B. ein Server) zur Steuerung des Zugriffs auf ein Elektrogerät, insbesondere auf ein Hausgerät, durch ein (ggf. mobiles) Anwendergerät beschrieben. Das Hausgerät kann eine Waschmaschine, einen Trockner, eine Spülmaschine, einen Ofen, ein Kochfeld, ein Reinigungsroboter, ein Kühlschrank, eine Kaffeemaschine und/oder eine Küchenmaschine umfassen. Alternativ oder ergänzend kann das Elektrogerät ein Gerät zur Heimautomatisierung, insbesondere eine Licht- und/oder Lüftungssteuerung, und/oder einen Fernseher umfassen. Das Anwendergerät kann ein Smartphone oder einen Tablet PC oder einen Desktop PC oder einen Laptop PC oder ein anderes Smart Device umfassen. Die Vorrichtung kann eingerichtet sein, über ein Kommunikationsnetzwerk mit dem Elektrogerät und dem Anwendergerät zu kommunizieren.

Die Vorrichtung kann eingerichtet sein, Elektrogerät-Daten in Bezug auf eine Datenkommunikation des Elektrogeräts zu ermitteln. Die Datenkommunikation kann dabei mit der Vorrichtung und/oder mit ein oder mehreren anderen Geräten erfolgen. Die Elektrogerät-Daten können von dem Elektrogerät an die Vorrichtung gesendet werden. Alternativ oder ergänzend können die Elektrogerät-Daten direkt von der Vorrichtung ermittelt werden.

Des Weiteren kann die Vorrichtung eingerichtet sein, Anwendergerät-Daten in Bezug auf eine Datenkommunikation des Anwendergeräts zu ermitteln. Die Datenkommunikation kann dabei mit der Vorrichtung und/oder mit ein oder mehreren anderen Geräten erfolgen. Die Anwendergerät-Daten können von dem Anwendergerät an die Vorrichtung gesendet werden. Alternativ oder ergänzend können die Anwendergerät-Daten direkt von der Vorrichtung ermittelt werden.

Die Vorrichtung kann ferner eingerichtet sein, auf Basis der Elektrogerät-Daten und auf Basis der Anwendergerät-Daten zu bestimmen, ob sich das Elektrogerät und das Anwendergerät in einem gemeinsamen lokalen Kommunikationsnetzwerk befinden oder nicht. Dabei kann das gemeinsame lokale Kommunikationsnetzwerk ein Local Area Network, kurz LAN, oder ein Wireless LAN, kurz WLAN, sein.

Außerdem kann die Vorrichtung eingerichtet sein, einen Zugriff des Anwendergeräts auf das Elektrogerät zu ermöglichen (ggf. nur dann), wenn bestimmt wird, dass sich das Elektrogerät und das Anwendergerät in einem gemeinsamen lokalen Kommunikationsnetzwerk befinden. Andererseits kann die Vorrichtung eingerichtet sein, einen Zugriff des Anwendergeräts auf das Elektrogerät zu unterbinden, wenn bestimmt wird, dass sich das Elektrogerät und das Anwendergerät nicht in einem gemeinsamen lokalen Kommunikationsnetzwerk befinden.

Insbesondere kann die Vorrichtung eingerichtet sein, zu ermöglichen, dass über das Anwendergerät eine Benutzerschnittstelle des Elektrogeräts bereitgestellt wird (mit der das Elektrogerät durch einen Nutzer bedient werden kann), wenn bestimmt wird, dass sich das Elektrogerät und das Anwendergerät in einem gemeinsamen lokalen Kommunikationsnetzwerk befinden. Des Weiteren kann die Vorrichtung eingerichtet sein, zu unterbinden, dass das Anwendergerät als Benutzerschnittstelle des Elektrogeräts verwendet werden kann, wenn bestimmt wird, dass sich das Elektrogerät und das Anwendergerät nicht in einem gemeinsamen lokalen Kommunikationsnetzwerk befinden.

Die Vorrichtung ist somit eingerichtet, über die Elektrogerät-Daten und die Anwendergerät-Daten zu überprüfen, ob sich das Anwendergerät in räumlicher Nähe zu (d.h. innerhalb des gleichen lokalen Kommunikationsnetzwerks mit) dem Elektrogerät befindet. Nur in diesem Fall wird es dem Anwendergerät ermöglicht, auf das Elektrogerät zuzugreifen, z.B. um das Elektrogerät zu steuern. So kann ein zuverlässiger und sicherer Betrieb eines Elektrogeräts ermöglicht werden. Ferner kann so ggf. auf den Verbau einer Benutzerschnittstelle in dem Elektrogerät verzichtet werden.

Die Elektrogerät-Daten können zumindest einen Teil einer ersten IP-Adresse anzeigen, über die das Elektrogerät von einem Kommunikationspartner außerhalb des lokalen Kommunikationsnetzwerks, in dem das Elektrogerät angeordnet ist, (insbesondere von der Vorrichtung) erreichbar ist. In entsprechender Weise können die Anwendergerät-Daten zumindest einen Teil einer zweiten IP-Adresse anzeigen, über die das Anwendergerät von einem Kommunikationspartner außerhalb des lokalen Kommunikationsnetzwerks, in dem das Anwendergerät angeordnet ist, (insbesondere von der Vorrichtung) erreichbar ist. Der Teil der ersten IP-Adresse und/oder der Teil der zweiten IP-Adresse können dabei jeweils eine öffentliche IPv4-Adresse oder ein Präfix einer IPv6-Adresse umfassen.

Die Vorrichtung kann eingerichtet sein, die erste IP-Adresse mit der zweiten IP-Adresse zu vergleichen, um in besonders zuverlässiger Weise zu bestimmen, ob sich das Elektrogerät und das Anwendergerät in einem gemeinsamen lokalen Kommunikationsnetzwerk befinden oder nicht.

Alternativ oder ergänzend können die Elektrogerät-Daten eine erste Laufzeit einer Datenkommunikation des Elektrogeräts mit der Vorrichtung umfassen. In entsprechender Weise können die Anwendergerät-Daten eine zweite Laufzeit einer Datenkommunikation des Anwendergeräts mit der Vorrichtung umfassen. Dabei können die Laufzeiten mittlere Laufzeiten für eine Mehrzahl von Nachrichten sein (um statische Schwankungen in Bezug auf die Laufzeiten auszugleichen).

Die Vorrichtung kann eingerichtet sein, die erste Laufzeit und die zweite Laufzeit miteinander zu vergleichen, um zu bestimmen, ob sich das Elektrogerät und das Anwendergerät in einem gemeinsamen lokalen Kommunikationsnetzwerk befinden oder nicht. Dabei kann z.B. bestimmt werden, dass das Elektrogerät und das Anwendergerät in einem gemeinsamen lokalen Kommunikationsnetzwerk angeordnet sind, wenn die erste Laufzeit und die zweite Laufzeit um weniger als einen Abweichungs-Schwellenwert voneinander abweichen. Andererseits kann bestimmt werden, dass das Elektrogerät und das Anwendergerät nicht in einem gemeinsamen lokalen Kommunikationsnetzwerk angeordnet sind, wenn die erste Laufzeit und die zweite Laufzeit um mehr als den Abweichungs-Schwellenwert voneinander abweichen. Durch die Berücksichtigung von Laufzeiten (insbesondere von Latenzen) kann in besonders zuverlässiger Weise bestimmt werden, ob sich das Elektrogerät und das Anwendergerät in einem gemeinsamen lokalen Kommunikationsnetzwerk befinden.

Die Elektrogerät-Daten können einen ersten Hostnamen eines Hosts anzeigen, über den mit dem Elektrogerät kommuniziert werden kann. In entsprechender Weise können die Anwendergerät-Daten einen zweiten Hostnamen eines Hosts anzeigen, über den mit dem Anwendergerät kommuniziert werden kann. Die Hostnamen können z.B. mittels Reverse-DNS-Lookup ermittelt werden.

Die Vorrichtung kann eingerichtet sein, den ersten Hostnamen und den zweiten Hostnamen miteinander zu vergleichen, um (in besonders zuverlässiger Weise) zu bestimmen, ob sich das Elektrogerät und das Anwendergerät in einem gemeinsamen lokalen Kommunikationsnetzwerk befinden oder nicht.

Die Elektrogerät-Daten können eine erste Liste von anderen Geräten umfassen, die innerhalb des lokalen Kommunikationsnetzwerks, in dem das Elektrogerät angeordnet ist, kommunizieren. Die erste Liste kann von dem Elektrogerät ermittelt worden sein und an die Vorrichtung gesendet worden sein. In entsprechender Weise können die Anwendergerät-Daten eine zweite Liste von anderen Geräten umfassen, die innerhalb des lokalen Kommunikationsnetzwerks, in dem das Anwendergerät angeordnet ist, kommunizieren. Die zweite Liste kann von dem Anwendergerät ermittelt und an die Vorrichtung gesendet worden sein. Dabei können die erste Liste und die zweite Liste jeweils MAC Adressen von ein oder mehreren anderen Geräten umfassen.

Die Vorrichtung kann eingerichtet sein, auf Basis der ersten Liste und auf Basis der zweiten Liste zu bestimmen, ob sich das Elektrogerät und das Anwendergerät in einem gemeinsamen lokalen Kommunikationsnetzwerk befinden oder nicht. Insbesondere kann die Vorrichtung eingerichtet sein, einen Grad der Überdeckung bzw. der Überlappung der ersten Liste und der zweiten Liste zu ermitteln. Es kann dann in besonders präziser Weise auf Basis des Grads der Überdeckung bestimmt werden, ob sich das Elektrogerät und das Anwendergerät in einem gemeinsamen lokalen Kommunikationsnetzwerk befinden oder nicht. Beispielsweise kann bestimmt werden, dass sich das Elektrogerät und das Anwendergerät in einem gemeinsamen lokalen Kommunikationsnetzwerk befinden, wenn der Grad der Überdeckung größer als ein bestimmter Überdeckungs-Schwellenwert (z.B. 80%) ist. Andererseits kann bestimmt werden, dass sich das Elektrogerät und das Anwendergerät nicht in einem gemeinsamen lokalen Kommunikationsnetzwerk befinden, wenn der Grad der Überdeckung kleiner als der Überdeckungs-Schwellenwert ist. So kann mit besonders hoher Genauigkeit ermittelt werden, ob sich das Elektrogerät und das Anwendergerät in einem gemeinsamen lokalen Kommunikationsnetzwerk befinden oder nicht.

Gemäß einem weiteren Aspekt der Erfindung wird ein Verfahren zur Steuerung des Zugriffs auf ein Elektrogerät durch ein (ggf. mobiles) Anwendergerät beschrieben. Das Verfahren umfasst das Ermitteln von Elektrogerät-Daten in Bezug auf eine Datenkommunikation des Elektrogeräts. Des Weiteren umfasst das Verfahren das Ermitteln von Anwendergerät-Daten in Bezug auf eine Datenkommunikation des Anwendergeräts. Das Verfahren umfasst ferner das Bestimmen, auf Basis der Elektrogerät-Daten und auf Basis der Anwendergerät-Daten, ob sich das Elektrogerät und das Anwendergerät in einem gemeinsamen lokalen Kommunikationsnetzwerk befinden oder nicht. Außerdem umfasst das Verfahren das Freigeben eines Zugriffs des Anwendergeräts auf das Elektrogerät, wenn bestimmt wird, dass sich das Elektrogerät und das Anwendergerät in einem gemeinsamen lokalen Kommunikationsnetzwerk befinden.

Es ist zu beachten, dass jegliche Aspekte der in diesem Dokument beschriebenen Vorrichtung und des in diesem Dokument beschriebenen Verfahrens in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen
- Figur 1: ein Blockdiagramm eines beispielhaften Systems zur Fernsteuerung eines Hausgeräts (als Beispiel für ein Elektrogerät);
- Figur 2: ein beispielhaftes lokales Netzwerk in einem Haushalt; und
- Figur 3: ein Ablaufdiagramm eines beispielhaften Verfahrens zur Steuerung des Zugriffs auf ein Hausgerät (als Beispiel für ein Elektrogerät).

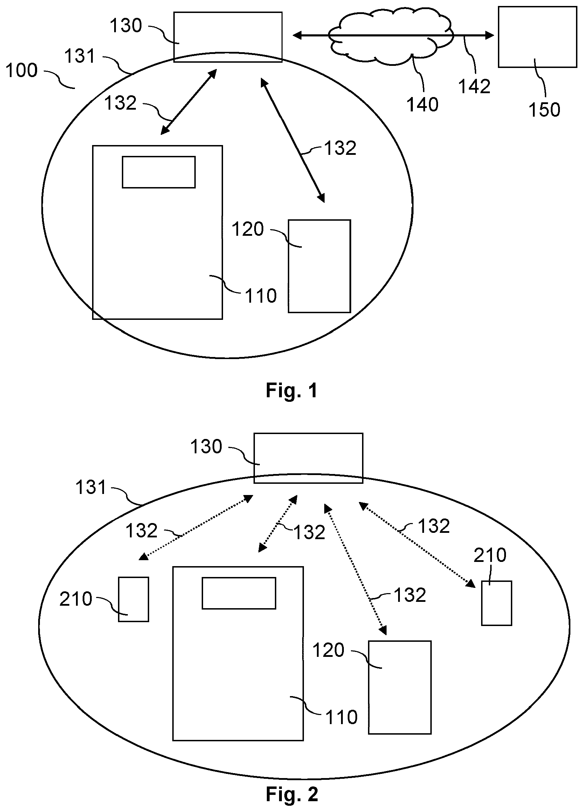

Wie eingangs dargelegt, befasst sich das vorliegende Dokument mit der sicheren und zuverlässigen Steuerung eines Hausgeräts (als Beispiel für ein Elektrogerät) anhand eines mobilen Anwendergeräts. In diesem Zusammenhang zeigt Fig. 1 ein beispielhaftes System 100 mit einem Hausgerät 110 (als Beispiel für ein Elektrogerät) und einem (ggf. mobilen) Anwendergerät 120 (z.B. einem Smartphone). Um eine sichere Bedienung des Hausgeräts 110 über eine Software Applikation auf dem Anwendergerät 120 zu ermöglichen, kann eine Bedingung dahingehend gestellt werden, dass die Bedienung nur dann ermöglicht wird, wenn sich das Anwendergerät 120 in der Nähe des Hausgeräts 110 befindet. Insbesondere kann als Bedingung gefordert werden, dass sich das Hausgerät 110 und das Anwendergerät 120 innerhalb des gleichen lokalen Netzwerks 131, insbesondere innerhalb des gleichen Local Area Networks (LAN) bzw. Wireless LAN, befinden.

Fig. 1 zeigt einen beispielhaften Router 130, der ausgebildet ist, unterschiedliche Geräte 110, 120, insbesondere das Hausgerät 110 und das Anwendergerät 120, innerhalb eines lokalen Netzwerks 131 miteinander zu verbinden. Mit anderen Worten, der Router 130 ermöglicht eine Kommunikation des Hausgeräts 110 und des Anwendergeräts 120 innerhalb eines gemeinsamen lokalen Netzwerks 131. Zu diesem Zweck können das Hausgerät 110 und das Anwendergerät 120 jeweils über eine lokale Kommunikationsverbindung 132 mit dem Router 130 verbunden sein. Der Router 130 kann eine entferne Kommunikationsverbindung 142 über das Internet 140 mit einer Zentraleinheit 150 (z.B. mit einem Backend-Server) ermöglichen. Die Zentraleinheit 150 wird in diesem Dokument auch als "Vorrichtung" bezeichnet. Das Hausgerät 110 und das Anwendergerät 120 können ausgebildet sein, über die Zentraleinheit 150 miteinander zu kommunizieren. Insbesondere kann eine Steuerung des Hausgeräts 110 durch das Anwendergerät 120 über die Zentraleinheit 150 ermöglicht werden. Alternativ oder ergänzend können Daten von dem Hausgerät 110 an das Anwendergerät 120 (indirekt) über die Zentraleinheit 150 übermittelt werden.

Die Zentraleinheit 150 kann ausgebildet sein, zu überprüfen, ob sich das Hausgerät 110 und das Anwendergerät 120 in dem gleichen lokalen Netzwerk 131 befinden oder nicht. Zu diesem Zweck können das Hausgerät 110 und das Anwendergerät 120 jeweils eine Kommunikationsverbindung 132, 142 mit der Zentraleinheit 150 aufbauen. Ein oder mehrere Parameter der jeweiligen Kommunikationsverbindung 132, 142 können ermittelt werden, um zu überprüfen, ob sich beide Geräte 110, 120 im gleichen lokalen Netzwerk 131 befinden oder nicht.

Wenn ermittelt wird, dass sich das Hausgerät 110 und das Anwendergerät 120 in dem gleichen lokalen Netzwerk 131 befinden, so kann es dem Anwendergerät 120 ermöglicht werden, auf das Hausgerät 110 zuzugreifen und/oder das Hausgerät 110 zu steuern. Wenn andererseits erkannt wird, dass sich das Hausgerät 110 und das Anwendergerät 120 nicht in dem gleichen lokalen Netzwerk 131 befinden, so kann ein Zugriff auf das Hausgerät 110 unterbunden werden. So kann eine sichere Steuerung des Hausgeräts 110 durch ein mobiles Anwendergerät 120 ermöglicht werden.

Es kann auf Basis von ein oder mehreren Parametern der Kommunikationsverbindungen 132, 142 des Hausgeräts 110 bzw. des Anwendergeräts 120 mit der Zentraleinheit 150 überprüft werden, ob sich beide Geräte 110, 120 im gleichen lokalen Netzwerk 131 befinden oder nicht.

Beispielhafte Parameter sind Client-ermittelte Parameter. Hierunter fallen Datenwerte, die die jeweiligen Clients (d.h. das Anwendergerät 120 bzw. das Hausgerät 110) selbst ermitteln. Diese Parameter können jedoch ggf. manipuliert werden, so dass ein Clientermittelter Parameter typischerweise nur als (zusätzlicher) Indikator verwendet werden kann, um zu ermitteln, ob sich beide Geräte 110, 120 in dem gleichen lokalen Netzwerk 131 befinden. Beispielhafte Client-ermittelte Parameter sind:
- BSSID (Basic Service Set Identification): eine 6 Byte lange MAC-Adresse des WLAN Access-Points 130, mit dem das jeweilige Gerät 110, 120 verbunden ist. Dieser Parameter ist nicht für drahtgebundene Geräte und nicht bei Verwendung eines Repeaters in einem WLAN verfügbar.
- SSID (Service Set Identifier): eine bis zu 32 Byte lange Zeichenkette, die einen menschenlesbaren Wert für den Netzwerknamen bereitstellt. Dabei ist zu beachten, dass möglicherweise ein Repeater einen anderen Netzwerknamen trägt und somit ggf. unterschiedliche SSIDs ermittelt werden können, obwohl sich beide Geräte 110, 120 im gleichen lokalen Netzwerk 131 befinden.
- Sichtbare WLAN-SSID.
- Geolocation: Über Sensorik ("GPS") oder über softwarebasierte Verfahren ("IPlocation data base") ermittelte ungefähre Position des jeweiligen Clients. Dies erfordert jedoch den Verbau entsprechender Sensorik in einem Hausgerät 110.

Andererseits kann mit ein oder mehreren Server-ermittelten Parametern (die von der Zentraleinheit 150 ermittelt werden können) in zuverlässiger Weise überprüft werden, ob sich beide Geräte 110, 120 im gleichen lokalen Netzwerk 131 befinden. Beispielhafte Server-ermittelte Parameter sind:
- die Remote-IP-Adresse der Verbindung 142 zwischen dem jeweiligen Gerät 110, 120 und der Zentraleinheit 150. Das Hausgerät 110 und das Anwendergerät 120 bauen jeweils eine bidirektionale Kommunikationsverbindung 132, 142 mit der Zentraleinheit 150 auf. Es kann dann die (externe) IP-Adresse des jeweiligen Gerätes 110, 120 (die typischerweise der (externen) IP-Adresse des Routers 130 entspricht) ermittelt werden (auch wenn beide Gerät 110, 120 unterschiedliche IP-Protokolle, d.h. IPv4 und IPv6, verwenden). So kann in zuverlässiger Weise ermittelt werden, ob sich beide Geräte 110, 120 im gleichen lokalen Netzwerk 131 befinden.
- Latenz bzw. Laufzeit der jeweiligen Kommunikationsverbindung 132, 142 auf Anwendungsschichtebene. Die Zentraleinheit 150 kann eingerichtet sein, wiederholt, insbesondere periodisch, zu überprüfen, wie lange das Anwendergerät 120 bzw. das Hausgerät 110 benötigen, um auf eine Anfrage (z.B. ein sogenanntes "ping") zu antworten. Wenn beide Geräte 110, 120 im gleichen lokalen Netzwerk 131 angeordnet sind, dann sollten die Antwortzeiten (d.h. die Laufzeiten) beider Geräte 110, 120 in etwa gleich sein. Dabei können ggf. Mittelwerte, insbesondere gleitende Mittelwerte, über die Antwortzeiten von mehreren Anfragen ermittelt und verglichen werden. So können statistische Schwankungen ausgeglichen werden.
- DNS (Domain Name Server) - Eintrag und/oder Hostname. Für IP-Adressen kann ein sogenannter Reverse-DNS-Lookup durchgeführt werden, der den oder die zugeordneten Hostnamen zu einer bestimmten IP-Adresse ermittelt. Dies kann unabhängig von der jeweils verwendeten IP-Version erfolgen.

Im Rahmen der IP-Version IPv4 weist ein Router 130 typischerweise eine einzige öffentliche IPv4-Adresse auf, die für die Kommunikationsverbindung 132, 142 des Anwendergeräts 120 und für die Kommunikationsverbindung 132, 142 des Hausgeräts 110 verwendet wird, wenn beide Gerät 110, 120 an dem gleichen Router 130 angeschlossen sind.

Bei der IP-Version IPv6 wird einem lokalen Netzwerk 131 typischerweise ein 64-bit langes Präfix zugewiesen, das allen Clients 110, 120 in dem lokalen Netzwerk 131 zugeordnet wird. Die einzelnen Clients 110, 120 verwenden das Präfix in ihren IPv6-Adressen und werden so eineindeutig dem lokalen Netzwerk 131 zugewiesen. Es kann somit in zuverlässiger Weise auf Basis des Präfixes der IP-Adresse überprüft werden, ob sich beide Geräte 110, 120 im gleichen lokalen Netzwerk 131 befinden oder nicht.

Alternativ oder ergänzend können Parameter der Netzwerkverbindungen 132, 142 des Hausgeräts 110 und des Anwendergeräts 120 zu dem jeweiligen Access-Point 130 und zu ein oder mehreren anderen Geräten 210 in der Umgebung ermittelt werden, wie beispielhafte in Fig. 2 dargestellt. Die Parameter können an die Zentraleinheit 150 übertragen werden, und die Zentraleinheit 150 kann eingerichtet sein, basierend auf den Parametern zu überprüfen, ob sich das Hausgerät 110 und das Anwendergerät 120 in dem gleichen lokalen Netzwerk 131 befinden oder nicht.

Es kann Metainformationen des Datenverkehrs im lokalen Netzwerk 131 (insbesondere LAN oder WLAN) des Hausgeräts 110 bzw. des Anwendergeräts 120 mit ein oder mehreren anderen Geräten 210 mitgelesen werden. Dabei ist ggf. aufgrund einer (optionalen) Verschlüsselung kein Decodieren der Nutzdaten möglich, aber die Kommunikationspartner 210 sind aufgrund ihrer jeweiligen Geräteadressen, insbesondere der jeweiligen MAC-Adresse, identifizierbar.

Das Hausgerät 110 und das Anwendergerät 120 können jeweils eingerichtet sein, in einem sogenannten Monitor-Mode den Datenverkehr innerhalb des jeweiligen lokalen Netzwerks 131 zu beobachten. Dabei können für die einzelnen Datenverbindungen jeweils die Absender-MAC-Adresse und die Empfänger-MAC-Adresse ermittelt werden. Das Hausgerät 110 und das Anwendergerät 120 können somit jeweils eine Liste von Absender-MAC-Adressen und Empfänger-MAC-Adressen anderer Geräte 210 ermitteln, die in dem jeweiligen lokalen Netzwerk 131 kommunizieren. Dabei kann auf Basis der Service-Set-Identifier (SSID) überprüft werden, ob sich ein anderes Gerät 210 im gleichen lokalen Netzwerk 131 befindet oder nicht.

Die Listen von MAC-Adressen des Anwendergeräts 120 und des Hausgeräts 110 können an die Zentraleinheit 150 übermittelt und von der Zentraleinheit 150 verglichen werden. Es kann dann der Grad der Überdeckung beider Listen ermittelt werden. Wenn der Grad der Überdeckung der anderen Geräte 210 in beiden Listen größer als ein Überdeckungs-Schwellenwert (z.B. 80% oder mehr) ist, so kann darauf geschlossen werden, dass sich das Anwendergerät 120 und das Hausgerät 110 in dem gleichen lokalen Netzwerk 131 befinden. Des Weiteren kann als zusätzliches Kriterium überprüft werden, ob das Hausgerät 110 und das Anwendergerät 120 mit dem gleichen Access Point 130 und/oder mit der gleichen SSID verbunden sind. Dies kann auf Basis des Basic Service Set Identifiers (BSSID) überprüft werden.

Der Grad der Überdeckung beider Listen von Geräten 210, d.h. das Ermitteln der Schnittmenge beider Listen von Geräten 210, bietet ein sicheres Kriterium, um zu überprüfen, ob sich das Hausgerät 110 und das Anwendergerät 120 im gleichen lokalen Netzwerk 131 befinden. Insbesondere ist dieses Kriterium relativ sicher in Bezug auf Relay-Angriffe.

Ggf. kann ein anderes Gerät 210 indirekt über einen Repeater mit dem Router 130 verbunden sein. Dabei kann der Repeater ggf. eine andere SSID aufweisen. Dennoch kann von dem Hausgerät 110 bzw. von dem Anwendergerät 120 jeweils eine Liste von MAC-Adressen der Geräte 210 ermittelt werden, die von dem jeweiligen Gerät 110, 120 gesehen werden. Dabei können andere Geräte 210, die ausschließlich über den Repeater miteinander kommunizieren, ggf. nicht von dem Hausgerät 110 bzw. dem Anwendergerät 120 gesehen werden.

Ggf. kann bei Verwendung eines Repeaters ein sogenannter Extended Service Set Identifier (ESSID) verwendet werden, um auszudrücken, dass alle Zugangsgeräte (Repeater, Router 130, etc.) die gleiche SSID ausstrahlen, um WLAN-Clients den Namen des Netzwerks 131 bekanntzugeben. In diesem Fall kann auf Basis der ESSID in zuverlässiger Weise ermittelt werden, ob sich ein anderes Gerät 210 im gleichen lokalen Netzwerk 131 wie das Hausgerät 110 bzw. das Anwendergerät 120 befindet.

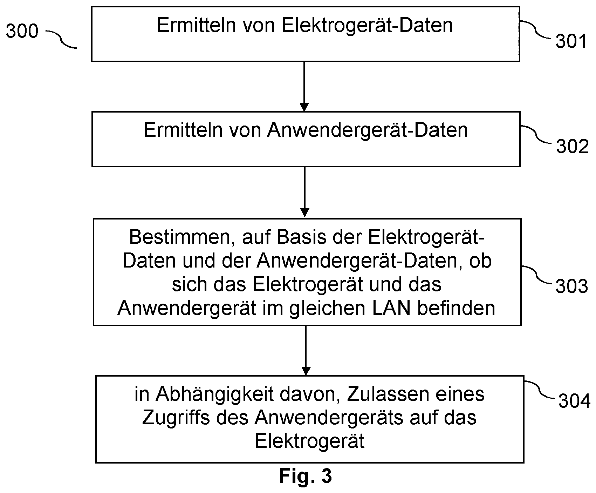

Fig. 3 zeigt ein Ablaufdiagramm eines beispielhaften (ggf. Computer-implementierten) Verfahrens 300 zur Steuerung des Zugriffs auf ein Elektrogerät 110 (insbesondere auf ein Hausgerät) durch ein mobiles Anwendergerät 120. Das Verfahren 300 umfasst das Ermitteln 301 von Elektrogerät-Daten in Bezug auf eine Datenkommunikation des Elektrogeräts 110, sowie das Ermitteln 302 von Anwendergerät-Daten in Bezug auf eine Datenkommunikation des Anwendergeräts 120. Die Elektrogerät-Daten bzw. die Anwendergerät-Daten können ein oder mehrere der o.g. Parameter (z.B. öffentliche IP-Adresse, Liste von MAC-Adressen, Laufzeiten bzw. Latenzen, etc.) umfassen bzw. anzeigen.

Des Weiteren umfasst das Verfahren 300 das Bestimmen 303, auf Basis der Elektrogerät-Daten und auf Basis der Anwendergerät-Daten, ob sich das Elektrogerät 110 und das Anwendergerät 120 in einem gemeinsamen lokalen Kommunikationsnetzwerk 131 befinden oder nicht. Das Verfahren 300 umfasst ferner das Freigeben 304 eines Zugriffs des Anwendergeräts 120 auf das Elektrogerät 110 (ggf. nur dann), wenn bestimmt wird, dass sich das Elektrogerät 110 und das Anwendergerät 120 in einem gemeinsamen lokalen Kommunikationsnetzwerk 131 befinden.

Durch die in diesem Dokument beschriebenen Maßnahmen kann eine zuverlässige und sichere Steuerung eines Elektrogeräts 110 durch ein mobiles Anwendergerät 120 ermöglicht werden. Dabei kann in zuverlässiger Weise sichergestellt werden, dass sich der Nutzer des Elektrogeräts 110 in unmittelbarer Nähe zu dem Elektrogerät 110 befindet. Des Weiteren können die Kosten für eine Benutzerschnittstelle des Elektrogeräts 110 reduziert werden.

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Verfahrens und der vorgeschlagenen Vorrichtung veranschaulichen sollen. Der beanspruchte Schutzbereich wird durch die anhängenden Ansprüche bestimmt.

## Patentansprüche

1. Vorrichtung (150) zur Steuerung des Zugriffs auf ein Elektrogerät (110) durch ein Anwendergerät (120); wobei die Vorrichtung (150) eingerichtet ist,
- Elektrogerät-Daten in Bezug auf eine Datenkommunikation des Elektrogeräts (110) zu ermitteln; und
- Anwendergerät-Daten in Bezug auf eine Datenkommunikation des Anwendergeräts (120) zu ermitteln;
**dadurch gekennzeichnet, dass**
- die Elektrogerät-Daten eine erste Liste von anderen Geräten (210) umfassen, die innerhalb eines lokalen Kommunikationsnetzwerks (131), in dem das Elektrogerät (110) angeordnet ist, kommunizieren;
- die Anwendergerät-Daten eine zweite Liste von anderen Geräten (210) umfasst, die innerhalb eines lokalen Kommunikationsnetzwerks (131), in dem das Anwendergerät (120) angeordnet ist, kommunizieren;
- auf Basis der ersten Liste und auf Basis der zweiten Liste zu bestimmen, ob sich das Elektrogerät (110) und das Anwendergerät (120) in einem gemeinsamen lokalen Kommunikationsnetzwerk (131) befinden oder nicht; und
- einen Zugriff des Anwendergeräts (120) auf das Elektrogerät (110) zu ermöglichen, wenn bestimmt wird, dass sich das Elektrogerät (110) und das Anwendergerät (120) in einem gemeinsamen lokalen Kommunikationsnetzwerk (131) befinden.

2. Vorrichtung (150) gemäß Anspruch 1, wobei die Vorrichtung (150) eingerichtet ist, einen Zugriff des Anwendergeräts (120) auf das Elektrogerät (110) zu unterbinden, wenn bestimmt wird, dass sich das Elektrogerät (110) und das Anwendergerät (120) nicht in einem gemeinsamen lokalen Kommunikationsnetzwerk (131) befinden.

3. Vorrichtung (150) gemäß einem vorhergehenden Anspruch, wobei
- die Elektrogerät-Daten Daten in Bezug auf eine Datenkommunikation des Elektrogeräts (110) mit der Vorrichtung (150) umfassen; und
- die Anwendergerät-Daten Daten in Bezug auf eine Datenkommunikation des Anwendergeräts (120) mit der Vorrichtung (150) umfassen.

4. Vorrichtung (150) gemäß einem vorhergehenden Anspruch, wobei
- die Elektrogerät-Daten zumindest einen Teil einer ersten IP-Adresse anzeigen, über die das Elektrogerät (110) von einem Kommunikationspartner außerhalb des lokalen Kommunikationsnetzwerks (131), in dem das Elektrogerät (110) angeordnet ist, erreichbar ist; und
- die Anwendergerät-Daten zumindest einen Teil einer zweiten IP-Adresse anzeigen, über die das Anwendergerät (120) von einem Kommunikationspartner außerhalb des lokalen Kommunikationsnetzwerks (131), in dem das Anwendergerät (120) angeordnet ist, erreichbar ist; und
- die Vorrichtung (150) eingerichtet ist, die erste IP-Adresse mit der zweiten IP-Adresse zu vergleichen, um zu bestimmen, ob sich das Elektrogerät (110) und das Anwendergerät (120) in einem gemeinsamen lokalen Kommunikationsnetzwerk (131) befinden oder nicht.

5. Vorrichtung (150) gemäß Anspruch 4, wobei der Teil der ersten IP-Adresse und/oder der Teil der zweiten IP-Adresse jeweils eine öffentliche IPv4-Adresse oder ein Präfix einer IPv6-Adresse umfassen.

6. Vorrichtung (150) gemäß einem der vorhergehenden Ansprüche, wobei
- die Elektrogerät-Daten eine erste Laufzeit einer Datenkommunikation des Elektrogeräts (110) mit der Vorrichtung (150) umfassen;
- die Anwendergerät-Daten eine zweite Laufzeit einer Datenkommunikation des Anwendergeräts (120) mit der Vorrichtung (150) umfassen; und
- die Vorrichtung (150) eingerichtet ist, die erste Laufzeit und die zweite Laufzeit miteinander zu vergleichen, um zu bestimmen, ob sich das Elektrogerät (110) und das Anwendergerät (120) in einem gemeinsamen lokalen Kommunikationsnetzwerk (131) befinden oder nicht.

7. Vorrichtung (150) gemäß einem der vorhergehenden Ansprüche, wobei
- die Elektrogerät-Daten einen ersten Hostnamen eines Hosts anzeigen, über den mit dem Elektrogerät (110) kommuniziert werden kann;
- die Anwendergerät-Daten einen zweiten Hostnamen eines Hosts anzeigen, über den mit dem Anwendergerät (120) kommuniziert werden kann; und
- die Vorrichtung (150) eingerichtet ist, den ersten Hostnamen und den zweiten Hostnamen miteinander zu vergleichen, um zu bestimmen, ob sich das Elektrogerät (110) und das Anwendergerät (120) in einem gemeinsamen lokalen Kommunikationsnetzwerk (131) befinden oder nicht.

8. Vorrichtung (150) gemäß einem der vorhergehenden Ansprüche, wobei die Vorrichtung (150) eingerichtet ist,
- einen Grad der Überdeckung der ersten Liste und der zweiten Liste zu ermitteln; und
- in Abhängigkeit von dem Grad der Überdeckung zu bestimmen, ob sich das Elektrogerät (110) und das Anwendergerät (120) in einem gemeinsamen lokalen Kommunikationsnetzwerk (131) befinden oder nicht.

9. Vorrichtung (150) gemäß einem der vorhergehenden Ansprüche, wobei die erste Liste und die zweite Liste jeweils MAC Adressen von ein oder mehreren anderen Geräten (210) umfassen.

10. Vorrichtung (150) gemäß einem vorhergehenden Anspruch, wobei die Vorrichtung (150) eingerichtet ist,
- zu ermöglichen, dass über das Anwendergerät (120) eine Benutzerschnittstelle des Elektrogeräts (110) bereitgestellt wird, wenn bestimmt wird, dass sich das Elektrogerät (110) und das Anwendergerät (120) in einem gemeinsamen lokalen Kommunikationsnetzwerk (131) befinden; und/oder
- zu unterbinden, dass das Anwendergerät (120) als Benutzerschnittstelle des Elektrogeräts (110) verwendet werden kann, wenn bestimmt wird, dass sich das Elektrogerät (110) und das Anwendergerät (120) nicht in einem gemeinsamen lokalen Kommunikationsnetzwerk (131) befinden.

11. Vorrichtung (150) gemäß einem vorhergehenden Anspruch, wobei das gemeinsame lokale Kommunikationsnetzwerk (131) ein Local Area Network, kurz LAN, oder ein Wireless LAN, kurz WLAN, ist.

12. Vorrichtung (150) gemäß einem vorhergehenden Anspruch, wobei
- das Elektrogerät (110) ein Hausgerät und/oder ein Gerät zur Heimautomatisierung umfasst; und/oder
- das Anwendergerät (120) ein Smartphone oder einen Tablet PC oder einen Desktop PC oder einen Laptop PC oder ein Smart Device umfasst.

13. Verfahren (300) zur Steuerung des Zugriffs auf ein Elektrogerät (110) durch ein Anwendergerät (120); wobei das Verfahren (300) umfasst,
- Ermitteln (301) von Elektrogerät-Daten in Bezug auf eine Datenkommunikation des Elektrogeräts (110); und
- Ermitteln (302) von Anwendergerät-Daten in Bezug auf eine Datenkommunikation des Anwendergeräts (120);
**gekennzeichnet durch** die Schritte
- Bestimmen (303), auf Basis der Elektrogerät-Daten und auf Basis der Anwendergerät-Daten, ob sich das Elektrogerät (110) und das Anwendergerät (120) in einem gemeinsamen lokalen Kommunikationsnetzwerk (131) befinden oder nicht; und
- Freigeben (304) eines Zugriffs des Anwendergeräts (120) auf das Elektrogerät (110), wenn bestimmt wird, dass sich das Elektrogerät (110) und das Anwendergerät (120) in einem gemeinsamen lokalen Kommunikationsnetzwerk (131) befinden;
- wobei die Elektrogerät-Daten eine erste Liste von anderen Geräten (210) umfassen, die innerhalb des lokalen Kommunikationsnetzwerks (131), in dem das Elektrogerät (110) angeordnet ist, kommunizieren;
- die Anwendergerät-Daten eine zweite Liste von anderen Geräten (210) umfasst, die innerhalb des lokalen Kommunikationsnetzwerks (131), in dem das Anwendergerät (120) angeordnet ist, kommunizieren; und
- auf Basis der ersten Liste und auf Basis der zweiten Liste bestimmt wird, ob sich das Elektrogerät (110) und das Anwendergerät (120) in einem gemeinsamen lokalen Kommunikationsnetzwerk (131) befinden oder nicht.

## Claims

1. Apparatus (150) for controlling the access to an electrical appliance (110) by a user device (120); wherein the apparatus (150) is configured so as:
- to determine electrical appliance data with regard to a data communication of the electrical appliance (110); and
- to determine user device data with regard to a data communication of the user device (120);
**characterised in that**
- the electrical appliance data comprises a first list of other appliances/devices (210) which communicate within a local communication network (131), in which the electrical appliance (110) is arranged;
- the user device data comprises a second list of other appliances/devices (210) which communicate within a local communication network (131) in which the user device (120) is arranged;
- on the basis of the first list and on the basis of the second list to establish whether or not the electrical appliance (110) and the user device (120) are located in a common local communication network (131); and
- to render possible an access of the user device (120) to the electrical appliance (110) if it is established that the electrical appliance (110) and the user device (120) are located in a common local communication network (131).

2. Apparatus (150) according to claim 1, wherein the apparatus (150) is configured so as to prevent an access of the user device (120) to the electrical appliance (110) if it is established that the electrical appliance (110) and the user device (120) are not located in a common local communication network (131).

3. Apparatus (150) according to a preceding claim, wherein
- the electrical appliance data comprises data with regard to a data communication of the electrical appliance (110) with the apparatus (150); and
- the user device data comprises data with regard to a data communication of the user device (120) with the apparatus (150).

4. Apparatus (150) according to a preceding claim, wherein
- the electrical appliance data indicates at least a part of a first IP address via which the electrical appliance (110) can be reached by a communication partner outside the local communication network (131) in which the electrical appliance (110) is arranged; and
- the user device data indicates at least a part of a second IP address via which the user device (120) can be reached by a communication partner outside the local communication network (131) in which the user device (120) is arranged; and
- the apparatus (150) is configured so as to compare the first IP address with the second IP address in order to establish whether or not the electrical appliance (110) and the user device (120) are located in a common local communication network (131).

5. Apparatus (150) according to claim 4, wherein the part of the first IP address and/or the part of the second IP address each comprise a public IPv4 address or a prefix of an IPv6 address.

6. Apparatus (150) according to one of the preceding claims, wherein
- the electrical appliance data comprises a first run time of a data communication of the electrical appliance (110) with the apparatus (150);
- the user device data comprises a second run time of a data communication of the user device (120) with the apparatus (150); and
- the apparatus (150) is configured so as to compare the first run time and the second run time with one another in order to establish whether or not the electrical appliance (110) and the user device (120) are located in a common local communication network (131).

7. Apparatus (150) according to one of the preceding claims, wherein
- the electrical appliance data indicates a first host name of a host via which it is possible to communicate with the electrical appliance (110);
- the user device data indicates a second host name of a host via which it is possible to communicate with the user device (120); and
- the apparatus (150) is configured so as to compare the first host name and the second host name with one another in order to establish whether or not the electrical appliance (110) and the user device (120) are located in a common local communication network (131).

8. Apparatus (150) according to one of the preceding claims, wherein
the apparatus (150) is configured so as:
- to determine an extent of the overlap of the first list and the second list; and
- in dependence upon the extent of the overlap to establish whether or not the electrical appliance (110) and the user device (120) are located in a common local communication network (131).

9. Apparatus (150) according to one of the preceding claims, wherein the first list and the second list each comprise MAC addresses of one or multiple other appliances/devices (210).

10. Apparatus (150) according to a preceding claim, wherein the apparatus (150) is configured so as:
- to render possible that a user interface of the electrical appliance (110) is provided via the user device (120) if it is established that the electrical appliance (110) and the user device (120) are located in a common local communication network (131); and/or
- to prevent that the user device (120) can be used as a user interface of the electrical appliance (110) if it is established that the electrical appliance (110) and the user device (120) are not located in a common local communication network (131).

11. Apparatus (150) according to a preceding claim, wherein the common local communication network (131) is a local area network, in short LAN, or a wireless LAN, in short WLAN.

12. Apparatus (150) according to a preceding claim, wherein:
- the electrical appliance (110) comprises a household appliance, and/or an appliance/device for home automation; and/or
- the user device (120) comprises a smartphone or a tablet PC or a desktop PC or a laptop PC or a smart device.

13. Method (300) for controlling the access to an electrical appliance (110) by a user device (120); wherein the method (300) comprises:
- determining (301) electrical appliance data with regard to a data communication of the electrical appliance (110); and
- determining (302) user device data with regard to a data communication of the user device (120);
**characterised by** the steps
- establishing (303) on the basis of the electrical appliance data and on the basis of the user device data whether or not the electrical appliance (110) and the user device (120) are located in a common local communication network (131); and
- allowing (304) an access of the user device (120) to the electrical appliance (110) if it is established that the electrical appliance (110) and the user device (120) are located in a common local communication network (131);
- wherein the electrical appliance data comprises a first list of other appliances/devices (210) which communicate within the local communication network (131) in which the electrical appliance (110) is arranged;
- the user device data comprises a second list of other appliances/devices (210) which communicate within the local communication network (131) in which the user device (120) is arranged; and
- on the basis of the first list and on the basis of the second list it is established whether or not the electrical appliance (110) and the user device (120) are located in a common local communication network (131).

## Revendications

1. Dispositif (150) pour la commande de l'accès à un appareil électrique (110) par un appareil utilisateur (120) ; dans lequel le dispositif (150) est aménagé
- pour déterminer des données d'appareil électrique en rapport avec une communication de données de l'appareil électrique (110) ; et
- pour déterminer des données d'appareil utilisateur en rapport avec une communication de données de l'appareil utilisateur (120) ;
**caractérisé en ce que**
- les données d'appareil électrique comprennent une première liste d'autres appareils (210) qui communiquent au sein d'un réseau de communication local (131) dans lequel l'appareil électrique (110) est disposé ;
- les données d'appareil utilisateur comprennent une deuxième liste d'autres appareils (210) qui communiquent au sein d'un réseau de communication local (131) dans lequel l'appareil utilisateur (120) est disposé ;
- pour établir, sur la base de la première liste et sur la base de la deuxième liste, si l'appareil électrique (110) et l'appareil utilisateur (120) se trouvent ou non dans un réseau de communication local commun (131) ; et
- pour permettre un accès de l'appareil utilisateur (120) à l'appareil électrique (110) lorsqu'il est établi que l'appareil électrique (110) et l'appareil utilisateur (120) se trouvent dans un réseau de communication local commun (131).

2. Dispositif (150) selon la revendication 1, dans lequel le dispositif est aménagé pour empêcher un accès de l'appareil utilisateur (120) à l'appareil électrique (110) lorsqu'il est établi que l'appareil électrique (110) et l'appareil utilisateur (120) ne se trouvent pas dans un réseau de communication local commun (131).

3. Dispositif (150) selon une revendication précédente, dans lequel
- les données d'appareil électrique comprennent des données en rapport avec une communication de données entre l'appareil électrique (110) et le dispositif (150) ; et
- les données d'appareil utilisateur comprennent des données en rapport avec une communication de données entre l'appareil utilisateur (120) et le dispositif (150).

4. Dispositif (150) selon une revendication précédente, dans lequel
- les données d'appareil électrique indiquent au moins une partie d'une première adresse IP via laquelle l'appareil électrique (110) est accessible par un partenaire de communication extérieur au réseau de communication local (131) dans lequel l'appareil électrique (110) se trouve ; et
- les données d'appareil utilisateur indiquent au moins une partie d'une deuxième adresse IP via laquelle l'appareil utilisateur (120) est accessible par un partenaire de communication extérieur au réseau de communication local (131) dans lequel l'appareil utilisateur (120) se trouve ; et
- le dispositif (150) est aménagé pour comparer la première adresse IP à la deuxième adresse IP, pour établir si l'appareil électrique (110) et l'appareil utilisateur (120) se trouvent ou non dans un réseau de communication local commun (131).

5. Dispositif (150) selon la revendication 4, dans lequel la partie de la première adresse IP et/ou la partie de la deuxième adresse IP comprennent respectivement une adresse IPv4 publique ou un préfixe d'une adresse IPv6.

6. Dispositif (150) selon l'une des revendications précédentes, dans lequel
- les données d'appareil électrique comprennent une première durée d'une communication de données entre l'appareil électrique (110) et le dispositif (150) ;
- les données d'appareil utilisateur comprennent une deuxième durée d'une communication de données entre l'appareil utilisateur (120) et le dispositif (150) ; et
- le dispositif (150) est aménagé pour comparer la première durée à la deuxième durée, pour établir si l'appareil électrique (110) et l'appareil utilisateur (120) se trouvent ou non dans un réseau de communication local commun (131).

7. Dispositif (150) selon l'une des revendications précédentes, dans lequel
- les données d'appareil électrique indiquent un premier nom d'hôte d'un hôte permettant de communiquer avec l'appareil électrique (110) ;
- les données d'appareil utilisateur indiquent un deuxième nom d'hôte d'un hôte permettant de communiquer avec l'appareil utilisateur (120) ; et
- le dispositif (150) est aménagé pour comparer le premier nom d'hôte au deuxième nom d'hôte, pour établir si l'appareil électrique (110) et l'appareil utilisateur (120) se trouvent ou non dans un réseau de communication local commun (131).

8. Dispositif (150) selon l'une des revendications précédentes, dans lequel le dispositif (150) est aménagé
- pour déterminer un degré de chevauchement entre la première liste et la deuxième liste ; et
- pour établir, en fonction du degré de chevauchement, si l'appareil électrique (110) et l'appareil utilisateur (120) se trouvent ou non dans un réseau de communication local commun (131).

9. Dispositif (150) selon l'une des revendications précédentes, dans lequel la première liste et la deuxième liste comprennent respectivement des adresses MAC d'un ou plusieurs autre(s) appareil(s) (210).

10. Dispositif (150) selon une revendication précédente, dans lequel le dispositif (150) est aménagé
- pour permettre la mise à disposition via l'appareil utilisateur (120) d'une interface utilisateur de l'appareil électrique (110) lorsqu'il est établi que l'appareil électrique (110) et l'appareil utilisateur (120) se trouvent dans un réseau de communication local commun (131) ; et/ou
- pour empêcher que l'appareil utilisateur (120) puisse être utilisé comme interface utilisateur de l'appareil électrique (110) lorsqu'il est établi que l'appareil électrique (110) et l'appareil utilisateur (120) ne se trouvent pas dans un réseau de communication local commun (131).

11. Dispositif (150) selon une revendication précédente, dans lequel le réseau de communication local commun (131) est un réseau local (ou LAN) ou un réseau local sans fil (ou WLAN).

12. Dispositif (150) selon une revendication précédente, dans lequel
- l'appareil électrique (110) comprend un appareil ménager et/ou un appareil de domotique ; et/ou
- l'appareil utilisateur (120) comprend un smartphone, une tablette PC ou un ordinateur de bureau ou un ordinateur portable ou un dispositif intelligent.

13. Procédé (300) pour la commande de l'accès à un appareil électrique (110) par un appareil utilisateur (120) ; dans lequel le procédé (300) comprend
- la détermination (301) de données d'appareil électrique en rapport avec une communication de données de l'appareil électrique (110) ; et
- la détermination (302) de données d'appareil utilisateur en rapport avec une communication de données de l'appareil utilisateur (120) ;
**caractérisé par** les étapes
- établissement (303), sur la base des données d'appareil électrique et sur la base des données d'appareil utilisateur, du fait de savoir si l'appareil électrique (110) et l'appareil utilisateur (120) se trouvent ou non dans un réseau de communication local commun (131) ; et
- autorisation (304) d'un accès de l'appareil utilisateur (120) à l'appareil électrique (110) lorsqu'il est établi que l'appareil électrique (110) et l'appareil utilisateur (120) se trouvent dans un réseau de communication local commun (131) ;
- dans lequel les données d'appareil électrique comprennent une première liste d'autres appareils (210) qui communiquent au sein du réseau de communication local (131) dans lequel l'appareil électrique (110) est disposé ;
- les données d'appareil utilisateur comprennent une deuxième liste d'autres appareils (210) qui communiquent au sein du réseau de communication local (131) dans lequel l'appareil utilisateur (120) est disposé ; et
- il est établi, sur la base de la première liste et sur la base de la deuxième liste, si l'appareil électrique (110) et l'appareil utilisateur (120) se trouvent ou non dans un réseau de communication local commun (131).
